# EUROPÄISCHE PATENTSCHRIFT

(11) **EP 2 490 882 B1**
(45) Veröffentlichungstag und Bekanntmachung des Hinweises auf die Patenterteilung: **06.08.2014**
(21) Anmeldenummer: 10755145.9
(22) Anmeldetag: 16.09.2010
(51) Int. Cl.: B29C 67/00, B22F 3/105, B29L 31/08, G06K 19/08, B29L 31/00, B29K 105/20

(54) **VERFAHREN ZUM HERSTELLEN EINES MARKIERTEN GEGENSTANDES**
METHOD FOR PRODUCING A MARKED OBJECT
PROCÉDÉ POUR PRODUIRE UN OBJET MUNI DE REPÈRES

(30) Priorität: 25.09.2009 DE 102009043597
(43) Veröffentlichungstag der Anmeldung: 29.08.2012
(73) Patentinhaber: Siemens Aktiengesellschaft, 80333 München (DE)
(72) Erfinder: PILZ, Heinz, 12305 Berlin (DE); REHME, Olaf, 20148 Hamburg (DE); SCHÄFER, Martin, 10557 Berlin (DE)
(86) Internationale Anmeldenummer: PCT/EP2010/063608
(87) Internationale Veröffentlichungsnummer: WO 2011/036087

(56) Entgegenhaltungen:
- WO-A1-2005/099635
- WO-A2-01/85386
- DE-A1-102006 005 927
- DE-C1- 4 309 524
- US-A1- 2004 026 163
- US-A1- 2009 173 443
- US-B1- 6 363 606

## Beschreibung

Die Erfindung bezieht sich auf ein Verfahren mit den Merkmalen gemäß dem Oberbegriff des Patentanspruchs 1.

Wie sich beispielsweise der deutschen Offenlegungsschrift DE 10 2006 005 927 A1 entnehmen lässt, entstehen jährlich durch Produktfälschung und Produktpiraterie wirtschaftliche Schäden für Unternehmen in einer Größenordnung von ca. 5 Milliarden Euro. Häufig werden insbesondere Produkte, die attraktive Märkte bedienen, von Produktpiraten kopiert und verbreitet. Die Produktpiraten schöpfen Gewinn daraus, dass ihre Marge nicht durch die oftmals sehr hohen initialen Entwicklungskosten belastet wird. Kunden, die derartige Produktkopien einsetzen, laufen dabei häufig Gefahr, minderwertige Produkte zu erwerben, die nicht die vorgegebenen Anforderungen erfüllen und die jeweils erforderlichen Qualifizierungsprozesse durchlaufen haben. Diese Probleme betreffen insbesondere den Markt der Ersatzteilversorgung für komplexe Maschinen und Anlagen, wie beispielsweise für Gas- und Dampfturbinen. Setzt ein Kunde vertragswidrig ein minderwertiges Ersatzteil ein, das zum Ausfall oder zu einem Schaden an einer Anlage führt, so steht der Lieferant vor dem Problem, diesen Sachverhalt dem Kunden nachweisen zu müssen, um die Qualität seiner Maschine bzw. Anlage zu schützen.

Das sichtbare Markieren von Produkten durch z. B. Laserbeschriftungsverfahren oder das Aufbringen von Hologrammen ist seit längerer Zeit bekannt. Auch ist die Kennzeichnung durch versteckte Markierungen bekannt, die von Produktpiraten nicht ohne weiteres entdeckt werden können, jedoch vom Originalhersteller mit relativ einfachen Mitteln überprüfbar sind.

Ein Verfahren zum Herstellen eines markierten Gegenstandes ist beispielsweise aus der deutschen Patentschrift DE 10 2006 030 365 B3 bekannt. Bei diesem vorbekannten Verfahren wird eine Turbinenschaufel durch ein Metallgussverfahren hergestellt, wobei ein Markierungsmittel in die Turbinenschaufel eingegossen wird.

Gemäß der DE 102 19 983 A1 ist es bekannt, dass mit additiven Herstellungsverfahren, wie Lasersintern, hergestellte Bauteile mit einer Markierung auf der sich ausbildenden Oberfläche versehen werden können. Hierbei können in der Markierung beispielsweise Identifikationskennungen vorgesehen werden, indem erhabene Buchstaben auf der Oberfläche mitgebildet werden.

Gemäß der DE 43 33 546 C2 ist es bekannt, dass transparente Gegenstände mit farbigen Einschlüssen gekennzeichnet werden können. Dies erfolgt dadurch, dass das Bauteil aus mehreren Schichten hergestellt wird, wobei unter anderem eine Folie als Schicht verwendet wird, die den gewünschten Farbeffekt erzielt. Diese wird nur in den Bereichen der Unterlage nicht verbunden, wo die Markierung entstehen soll. In den restlichen Bereichen wird die Folie entfernt und die verbleibenden Folienteile durch nachfolgende Schichten eingeschlossen. Die verbleibenden Folienteile, die die Markierung bilden, sind in dem fertig gestellten, transparenten Bauteil zu erkennen.

Gemäß der WO2005/099635 A1 und der US 6,363,606 B1 sind Verfahren zum Markieren von Bauteilen beschrieben. Hierbei können additive Fertigungsverfahren zum Einsatz kommen, wobei die Markierungen dadurch hergestellt werden, dass in dem herzustellenden Bauteil Hohlräume ausgebildet werden. Diese Hohlräume können unter anderem mit einem Markierungsmaterial gefüllt werden oder leer vorliegen. Mit geeigneten Nachweismethoden können diese Markierungen in den Bauteilen nach deren Herstellung ausfindig gemacht werden und helfen dann zur Identifizierung des betreffenden Bauteils beispielsweise als Originalteil. US 6 363 606 B1 offenbart ein Verfahren zum Herstellen eines markierten Gegenstandes, gemäß dem Oberbegriff des Anspruchs 1.

Der Erfindung liegt die Aufgabe zugrunde, ein Verfahren zum Herstellen eines markierten Gegenstandes anzugeben, mit dem sich Markierungen realisieren lassen, die einen möglichst großen Schutz vor einem Kopieren gewährleisten.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass der Gegenstand durch ein additives Herstellungsverfahren hergestellt wird, wobei während des additiven Herstellungsverfahrens in dem Gegenstand zumindest ein Markierungsmittel gebildet wird.

Erfindungsgemäß ist vorgesehen, dass in dem zu markierenden Gegenstand und in einem Hohlraum innerhalb des zu markierenden Gegenstandes, ein poröses Gefüge hergestellt wird und die Porenverteilung des porösen Gefüges das Markierungsmittel bildet. Bei dieser Ausgestaltung lässt sich beispielsweise anhand einer in einer Datenbank abgespeicherten Porenverteilung feststellen, ob ein Gegenstand ein Originalgegenstand ist oder nicht, indem die beim zu überprüfenden Gegenstand vorhandene Porenverteilung mit der in der Datenbank für den Originalgegenstand abgespeicherten Porenverteilung verglichen wird: Stimmen die vorhandene und die abgespeicherte Porenverteilung überein, so handelt es sich um den Originalgegenstand, andernfalls um einen anderen Gegenstand, beispielsweise um ein nicht autorisiertes Imitat. Bei dem porösen Gefüge kann es sich beispielsweise um ein Sintergefüge handeln.

Das poröse Gefüge lässt sich besonders einfach und damit vorteilhaft bilden, indem ein Energiestrahl mit anderen Parametern als denen, die zur Herstellung der Materialschichten verwendet werden, auf das Basismaterial (Pulver- oder Flüssigkeitsschicht) gerichtet wird. Vorzugsweise werden die Parameter zur Erzeugung des porösen Gefüges stochastisch variiert, so dass eine zufällige Porenverteilung innerhalb des Gefüges gebildet wird. Beispielsweise wird die Energiedichte des Energiestrahls während der Erzeugung des porösen Gefüges stochastisch variiert, und es wird dadurch die zufällige Porenverteilung innerhalb des Gefüges gebildet. Eine solche stochastische Porenverteilung lässt sich quasi nicht kopieren, so dass ein optimaler Kopierschutz gewährleistet ist.

Ein wesentlicher Vorteil des erfindungsgemäßen Verfahrens besteht darin, dass dieses sehr viele Freiheitsgrade bei der Gestaltung der Markierung ermöglicht. Erfindungsgemäß können während des additiven Herstellungsverfahrens Herstellungsparameter variiert werden, sei es stochastisch oder deterministisch, um Dichteschwankungen zu erzeugen. In diesem Falle bilden die Dichteschwankungen die Markierungsmittel. Das erfindungsgemäß vorgesehene additive Herstellungsverfahren ermöglicht es also, verschiedene Markierungsmittel einzeln oder in Kombination miteinander einzusetzen.

Ein weiterer wesentlicher Vorteil des erfindungsgemäßen Verfahrens ist darin zu sehen, dass dieses sehr schnell und kostengünstig durchführbar ist, weil mit ein und demselben Verfahren, also mit anderen Worten gleichzeitig, der Gegenstand und die Markierungen hergestellt werden können.

Additive Herstellungsverfahren sind für sich aus anderen Technikgebieten bereits bekannt. Nur beispielhaft sei diesbezüglich auf die Druckschrift "Wohlers Report 2008" (Terry T. Wohlers, Wohlers Associates Inc., Fort Collins, CO, USA, ISBN 0-9754429-4-5) verwiesen. Dieser Druckschrift lassen sich Beispiele entnehmen, wie additive Herstellungsverfahren im Einzelnen ausgeführt werden können.

Vorzugsweise wird das zumindest eine Markierungsmittel in dem Gegenstand eingeschlossen oder eingebettet.

Zum Überprüfen eines in einem markierten Gegenstand enthaltenen Markierungsmittels können unterschiedliche Detektionsverfahren eingesetzt werden. Beispielsweise können durchstrahlende Verfahren, wie z. B. auf der Basis von Röntgenstrahlung mit planarer bzw. zweidimensionaler Auflösung oder auf der Basis von Computertomographie mit dreidimensionaler Auflösung, eingesetzt werden, um lokale Dichteunterschiede im Gegenstand zu erkennen und abzubilden.

Alternativ ist es möglich, akustische Verfahren einzusetzen, die Grenzflächen in Bereichen mit lokalen Dichteunterschieden beispielsweise durch Ultraschall erkennen. Akustische Verfahren ermöglichen üblicherweise eine dreidimensionale Auflösung.

Alternativ oder zusätzlich ist es möglich, Markierungen mit Hilfe thermischer Verfahren sichtbar zu machen. Zu erwähnen ist in diesem Zusammenhang die aktive Thermographie, die eine zweidimensionale Auflösung ermöglicht und Unterschiede in der lokalen Wärmeleitfähigkeit und dadurch lokale Dichteunterschiede innerhalb des markierten Gegenstandes darstellt.

Auch können elektromagnetische Verfahren eingesetzt werden. Beispielhaft sind diesbezüglich induktive Messverfahren zu erwähnen, bei denen, zum Beispiel mit einem bewegten Sensor, ein Magnetfeld erzeugt wird und die Veränderung des Magnetfeldes durch lokale Dichteunterschiede in dem markierten Gegenstand mittels einer Induktionsspannung in einer Spule des Sensors angezeigt wird.

Geeignet sind auch andere magnetische Detektionsverfahren, wenn beispielsweise magnetisches Material zum Markieren des Gegenstandes in dem Gegenstand eingebettet wird.

Gemäß der Erfindung lässt sich der markierte Gegenstand schichtweise herstellen. Vorzugsweise wird eine erste Pulverschicht mittels eines Energiestrahles lokal unter Bildung einer ersten Materialschicht geschmolzen; anschließend werden darauf, also auf diese erste Materialschicht, Schicht für Schicht weitere Pulverschichten aufgebracht, die jeweils unter Bildung weiterer Materialschichten lokal geschmolzen werden. In dieser Weise wird der markierte Gegenstand durch eine Vielzahl aufeinander gesetzter Einzelschichten gebildet.

Alternativ können anstelle von Pulverschichten auch Flüssigkeitsschichten verwendet werden, die lokal mittels eines Energiestrahles ausgehärtet werden, so dass der markierte Gegenstand in dieser Weise aus Schichten zusammengesetzt wird.

Besonders bevorzugt wird der markierte Gegenstand in einem metallischen Pulverbett mit einem Laserstrahl oder Elektronenstrahl hergestellt. Der Laser- oder Elektronenstrahl dient dabei zum selektiven Aufschmelzen der dünnen Pulverschichten, die nach dem Abkühlen den markierten Gegenstand bilden.

Zur Ansteuerung des Energiestrahles werden vorzugsweise CAD-Daten verarbeitet, die den zu markierenden Gegenstand durch ein Volumenmodell oder ein Oberflächenmodell beschreiben. Zur Verarbeitung werden die CAD-Daten vor oder während des additiven Herstellungsprozesses vorzugsweise in Schichtdaten überführt, wobei jede Schicht einem Querschnitt des zu markierenden Gegenstandes mit finiter Schichtdicke entspricht.

Die Querschnittsgeometrie des zu markierenden Gegenstandes wird während des additiven Herstellungsverfahrens vorzugsweise durch eine linienartige Belichtung der äußeren Konturen und einer flächenartigen Belichtung der zu füllenden Querschnitte hergestellt. Die linienartige Belichtung wird im Falle einer punktförmigen Charakteristik des Energiestrahles vorzugsweise durch eine entsprechende Strahlbewegung realisiert. Eine flächenartige Belichtung kann beispielsweise durch eine Aneinanderreihung von linienartigen Belichtungsvorgängen erfolgen.

Besonders einfach und damit vorteilhaft lässt sich eine Markierung bilden, indem während des additiven Herstellungsverfahrens ein Herstellungsparameter oder mehrere Herstellungsparameter variiert werden, sei es stochastisch oder deterministisch, und die Markierung durch eine lokale Änderung der Materialeigenschaften innerhalb des Gegenstandes, beispielsweise durch eine lokale Dichteänderung, gebildet wird. Zusätzlich kann in den zu markierenden Gegenstand oder in einen Hohlraum innerhalb des zu markierenden Gegenstandes ein anderes Material als das, das für das additive Herstellungsverfahren verwendet wird, eingefügt werden. Vorzugsweise wird ein Material verwendet, das eine andere Dichte, eine andere Permittivität und/oder eine andere Permeabilität aufweist. Vorzugsweise wird als Markierungsmittel ein magnetisches Material eingefügt.

Zusätzlich kann in dem zu markierenden Gegenstand oder in einem Hohlraum innerhalb des zu markierenden Gegenstandes während des additiven Herstellungsverfahrens unbehandeltes oder anders behandeltes Basismaterial (z. B. ungeschmolzenes oder anders geschmolzenes Pulverschichtmaterial oder unausgehärtetes oder anders gehärtetes Flüssigkeitsschichtmaterial) belassen oder erzeugt werden, so dass das Basismaterial als solches, beispielsweise durch dessen Dichteschwankungen, ein Markierungsmittel bildet. Mit dem Begriff Basismaterial ist das Material gemeint, das für das additive Herstellungsverfahren verwendet wird.

Zusätzlich kann in dem zu markierenden Gegenstand oder in einem Hohlraum innerhalb des zu markierenden Gegenstandes ein Markierungsmittel in Form eines zwei- oder dreidimensionalen Codes gebildet werden; ein solches Markierungsmittel wird vorzugsweise während bzw. durch das additive Herstellungsverfahren gebildet. Beispielsweise wird ein Markierungsmittel in Form eines Barcodes und/oder ein Markierungsmittel mit einer Prüfziffer gebildet.

Insbesondere bei komplexen Anlagen und Maschinen wie Gas- oder Dampfturbinen richten Produktfälschungen einen großen wirtschaftlichen Schaden an. Demgemäß wird es als vorteilhaft angesehen, wenn das beschriebene Markierungsverfahren für Komponenten von Gas- oder Dampfturbinen eingesetzt wird. Vorzugsweise wird als markierter Gegenstand eine Turbinenschaufel, insbesondere eine Laufschaufel, eine Leitschaufel oder eine Kompressorschaufel hergestellt.

Die Erfindung wird nachfolgend anhand von Ausführungsbeispielen näher erläutert; dabei zeigen beispielhaft
- Figur 1: ein Ausführungsbeispiel für einen markierten Gegenstand, anhand dessen beispielhaft das, erfindungsgemäße Verfahren erläutert wird und
- Figur 2: ein Ausführungsbeispiel für einen Gegenstand, bei dem die Markierung durch ein poröses Gefüge mit stochastischer Porenverteilung gebildet ist.

Der Übersicht halber werden für identische oder vergleichbare Komponenten in den Figuren stets dieselben Bezugszeichen verwendet.

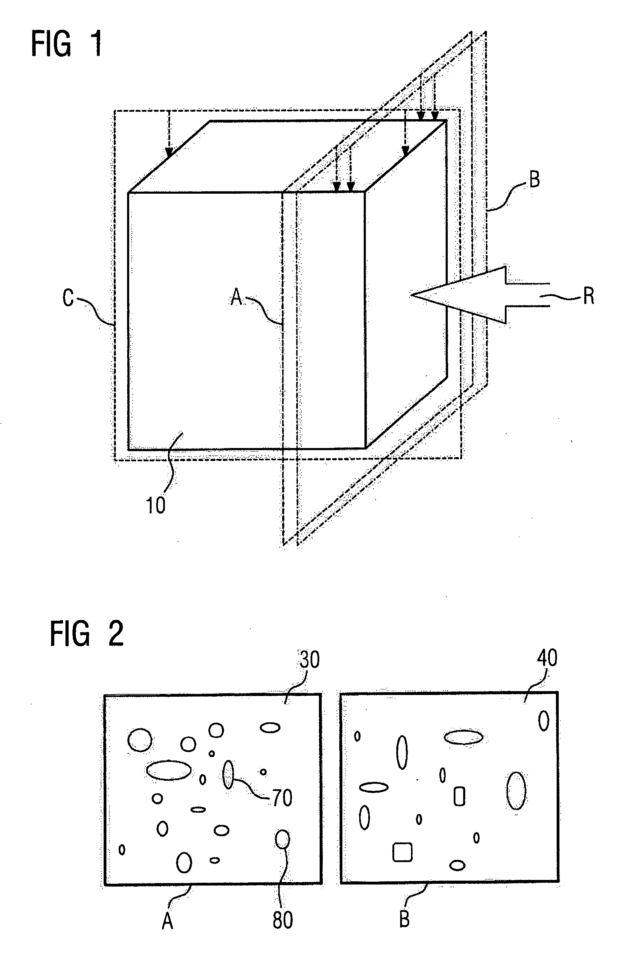

In der Figur 1 ist ein Ausführungsbeispiel für einen markierten Gegenstand dargestellt, der mit dem Bezugszeichen 10 gekennzeichnet ist. Bei dem markierten Gegenstand kann es sich beispielsweise um eine Komponente für eine Gas- oder Dampfturbine, beispielsweise um eine Turbinenschaufel, handeln.

In der Figur 1 sind mit den Bezugszeichen A und B zwei unterschiedliche Querschnitte durch den Gegenstand 10 dargestellt. Das Bezugszeichen C kennzeichnet einen Längsschnitt durch den Gegenstand.

Wird nun der markierte Gegenstand 10 entlang einer Untersuchungsrichtung R untersucht, so lassen sich je nach Untersuchungsverfahren bzw. Untersuchungsart Markierungsmittel, die in den Ebenen A und B versteckt sind, auffinden. Anhand der Markierungsmittel lässt sich nachfolgend feststellen, ob der markierte Gegenstand ein Originalgegenstand oder eine Kopie ist. Beispielsweise wird untersucht, ob die Markierung mit in einer Datenbank abgespeicherten Markierung übereinstimmt. Findet sich eine entsprechende Markierung in der Datenbank wieder, so handelt es sich bei dem Gegenstand 10 um einen Originalgegenstand; findet sich eine entsprechende Markierung in der Datenbank jedoch nicht wieder, so handelt es sich offensichtlich um eine nicht autorisierte Kopie.

Anhand der Figur 2 wird nachfolgend erläutert, wie poröse Gefüge zum Markieren des Gegenstandes 10 gemäß Figur 1 herangezogen werden können. Auch in der Figur 2 erkennt man die Materialschicht 30, die in der Querschnittsebene A angeordnet ist. Außerdem ist die Materialschicht 40 erkennbar, die in der Querschnittsebene B liegt.

Es lässt sich in der Figur 2 erkennen, dass in den Materialschichten 30 und 40 ein dreidimensionales poröses Gefüge 70 gebildet ist, das eine Vielzahl an Einzelporen 80 aufweist. Die Anordnung der Poren 80 innerhalb des porösen Gefüges 70 ist stochastisch.

Das in der Figur 2 dargestellte poröse Gefüge 70 kann beispielsweise hergestellt werden, indem während des additiven Herstellungsverfahrens lokal das Schmelzen oder Aushärten des Basismaterials (Pulver bzw. Flüssigkeit) zur Herstellung der Materialschichten 30 und 40 stochastisch oder deterministisch variiert wird. Beispielsweise wird lokal die Energiedichte eines Energiestrahles zum Schmelzen oder Aushärten des Basismaterials variiert.

Durch eine Parametervariation lässt sich beispielsweise ein poröses Gefüge in Form eines Sintergefüges bilden. Ein solches Sintergefüge kann durch die Verbindung von Körnern eines pulvrigen Basismaterials gebildet werden, die über so genannte Sinterhälse verbunden sind. Zwischen den Pulverkörnern befinden sich in einem solchen Fall Hohlräume, die üblicherweise das zum Zeitpunkt der Herstellung des Gegenstandes eingesetzte Umgebungs- oder Prozessgas beinhalten. Ein solches Sintergefüge besitzt einen regellosen Aufbau, bedingt durch die stochastische Verteilung der Körner in der Pulverschüttung, so dass jeder Gegenstand, der mit einem solchen Verfahren hergestellt wird, eine nicht reproduzierbare und damit eindeutige Kennzeichnung aufweist.

Wird das in der Figur 2 dargestellte poröse Gefüge 70 im Rahmen der Herstellung des Gegenstandes 10 oder danach messtechnisch erfasst und beispielsweise in elektronischer Form in einer Datenbank hinterlegt, so kann zu einem späteren Zeitpunkt jederzeit festgestellt werden, ob es sich bei einem zu prüfenden Gegenstand um eben diesen Gegenstand 10 gemäß Figur 1 handelt: Hierzu wird an den entsprechenden Stellen nach einer Porenverteilung gesucht; ist eine solche auffindbar, so wird diese anschließend mit der in der Datenbank abgespeicherten Porenverteilung verglichen. Stimmen die Porenverteilungen überein, so handelt es sich um einen Originalgegenstand, andernfalls um ein Imitat.

## Patentansprüche

1. Verfahren zum Herstellen eines markierten Gegenstandes (10), bei dem der Gegenstand durch ein additives Herstellungsverfahren hergestellt wird, wobei während des additiven Herstellungsverfahrens in dem Gegenstand zumindest ein Markierungsmittel (50) gebildet wird, wobei während des additiven Herstellungsverfahrens zumindest ein Hohlraum erzeugt wird,
- in dem Hohlraum ein Markierungsmittel gebildet oder eingefügt wird und
- der Hohlraum durch das additive Herstellungsverfahren geschlossen wird, wobei das Markierungsmittel in dem Hohlraum eingeschlossen wird,
**dadurch gekennzeichnet, dass** in dem Gegenstand ein poröses Gefüge (70) als der mindestens eine Hohlraum hergestellt wird und die Porenverteilung des porösen Gefüges das Markierungsmittel bildet, wobei die Parameter zur Erzeugung des porösen Gefüges stochastisch oder deterministisch variiert werden, so dass eine zufällige Porenverteilung innerhalb des Gefüges gebildet wird.

2. Verfahren nach Anspruch 1,
**dadurch gekennzeichnet, dass** der markierte Gegenstand schichtweise aus Materialschichten (30, 40) hergestellt wird,
- indem eine erste Pulverschicht mittels eines Energiestrahles lokal unter Bildung einer ersten Materialschicht geschmolzen wird und anschließend ausgehärtet wird und
- indem darauf Schicht für Schicht weitere Pulverschichten aufgebracht, jeweils lokal geschmolzen und anschließend unter Bildung weiterer Materialschichten ausgehärtet werden.

3. Verfahren nach Anspruch 1,
**dadurch gekennzeichnet, dass** der markierte Gegenstand schichtweise aus Materialschichten hergestellt wird,
- indem eine erste Flüssigkeitsschicht mittels eines Energiestrahles lokal unter Bildung einer ersten Materialschicht gehärtet wird und
- indem darauf Schicht für Schicht weitere Flüssigkeitsschichten aufgebracht und jeweils unter Bildung weiterer Materialschichten lokal ausgehärtet werden.

4. Verfahren nach einem der voranstehenden Ansprüche,
**dadurch gekennzeichnet, dass** das poröse Gefüge gebildet wird, indem ein Energiestrahl mit anderen Parametern als denen, die zur Herstellung der Materialschichten verwendet werden, eingesetzt wird.

5. Verfahren nach einem der voranstehenden Ansprüche,
**dadurch gekennzeichnet, dass** die Energiedichte des Energiestrahls während der Erzeugung des porösen Gefüges stochastisch oder deterministisch variiert wird und dadurch eine zufällige Porenverteilung innerhalb des Gefüges gebildet wird.

6. Verfahren nach einem der voranstehenden Ansprüche,
**dadurch gekennzeichnet, dass** in einen Hohlraum des Gegenstandes ein magnetisches Material eingefügt wird, das ein zusätzliches Markierungsmittel bildet, und der Hohlraum geschlossen wird.

7. Verfahren nach einem der voranstehenden Ansprüche,
**dadurch gekennzeichnet, dass** innerhalb des zu markierenden Gegenstandes Pulverschicht- oder Flüssigkeitsmaterial belassen wird und das Pulverschicht- oder Flüssigkeitsmaterial ein zusätzliches Markierungsmittel bildet.

8. Verfahren nach dem Anspruch 7,
**dadurch gekennzeichnet, dass** in dem Gegenstand durch das Markierungsmittel zusätzlich eine Markierung in Form eines zwei- oder dreidimensionalen Codes gebildet wird.

9. Verfahren nach Anspruch 8,
**dadurch gekennzeichnet, dass** in dem Gegenstand durch das Markierungsmittel zusätzlich eine Markierung in Form eines Barcodes gebildet wird.

10. Verfahren nach Anspruch 8 oder 9,
**dadurch gekennzeichnet, dass** in dem Gegenstand durch das Markierungsmittel zusätzlich eine Markierung mit einer Prüfziffer gebildet wird.

11. Verfahren nach einem der voranstehenden Ansprüche,
**dadurch gekennzeichnet, dass** als markierter Gegenstand eine Komponente einer Gas- oder Dampfturbine hergestellt wird.

12. Verfahren nach Anspruch 11,
**dadurch gekennzeichnet, dass** als markierter Gegenstand eine Turbinenschaufel, insbesondere eine Laufschaufel, eine Leitschaufel oder eine Kompressorschaufel hergestellt wird.

## Claims

1. Method for producing a marked object (10), in which the object is produced by an additive manufacturing method, wherein at least one marking means (50) is formed in the object during the additive manufacturing method, wherein during the additive manufacturing method at least one cavity is produced,
- in the cavity a marking means is formed or inserted, and
- the cavity is closed by the additive manufacturing method, with the marking means being enclosed in the cavity, **characterized in that** a porous substructure (70) is produced as the at least one cavity in the object and the pore distribution of the porous substructure forms the marking means, wherein the parameters for producing the porous substructure are stochastically or deterministically varied, such that a random pore distribution inside the substructure is formed.

2. Method according to Claim 1, **characterized in that** the marked object is produced in layer-wise fashion from material layers (30, 40),
- by melting a first powder layer locally using an energy beam to form a first material layer and subsequently curing it and
- by applying further powder layers, layer by layer, onto said first material layer, which further powder layers are melted locally respectively and are subsequently cured to form further material layers.

3. Method according to Claim 1, **characterized in that** the marked object is produced in layer-wise fashion from material layers,
- by curing a first liquid layer locally using an energy beam to form a first material layer and
- by applying further liquid layers, layer by layer, onto said first material layer, which further liquid layers are cured locally respectively to form further material layers.

4. Method according to one of the preceding claims, **characterized in that** the porous substructure is formed by using an energy beam having different parameters than those used to produce the material layers.

5. Method according to one of the preceding claims, **characterized in that** the energy density of the energy beam is varied stochastically or deterministically during the production of the porous substructure and thus a random pore distribution inside the substructure is formed.

6. Method according to one of the preceding claims, **characterized in that** inserted in a cavity of the object is a magnetic material, which forms an additional marking means, and the cavity is closed.

7. Method according to one of the preceding claims, **characterized in that** powder layer material or liquid material is left inside the object to be marked and the powder layer material or liquid material forms an additional marking means.

8. Method according to Claim 7, **characterized in that** a marking in the form of a two- or three-dimensional code is additionally formed in the object by the marking means.

9. Method according to Claim 8, **characterized in that** a marking in the form of a barcode is additionally formed in the object by the marking means.

10. Method according to Claim 8 or 9, **characterized in that** a marking with a check digit is additionally formed in the object by the marking means.

11. Method according to one of the preceding claims, **characterized in that** a component of a gas or steam turbine is produced as the marked object.

12. Method according to Claim 11, **characterized in that** a turbine blade, in particular a rotor blade, guide vane or compressor blade, is produced as the marked object.

## Revendications

1. Procédé de production d'un objet (10) muni de repères dans lequel on produit l'objet par un procédé de production par addition, dans lequel pendant le procédé de production par addition, on forme dans l'objet au moins un moyen ( 15 ) de repérage dans lequel on produit pendant le procédé de production par addition au moins une cavité,
- on forme ou on insère dans la cavité un moyen de repérage et
- on ferme la cavité par le procédé de production par addition, le moyen de repérage étant enfermé dans la cavité,
**caractérisé en ce que** l'on produit dans l'objet une structure ( 70 ) poreuse en tant que la au moins une cavité et la répartition des pores de la structure poreuse forme le moyen de repérage, les paramètres de production de la structure poreuse étant modifiés de manière stochastique ou déterministe de manière à former au sein de la structure une répartition de pores au hasard.

2. Procédé suivant la revendication 1,
**caractérisé en ce que** l'on produit l'objet muni de repères couche par couche en des couches ( 30 , 40 ) de matière,
- en faisant fondre localement, avec formation d'une première couche de matière, une première couche de poudre au moyen d'un faisceau d'énergie et
- en déposant ensuite couche par couche d'autres couches de poudre en les faisant fondre localement respectivement et ensuite en les durcissant avec formation d'autres couches de matière.

3. Procédé suivant la revendication 1,
**caractérisé en ce qu'**on produit l'objet muni de repères couche par couche en des couches de matière
- en durcissant localement, avec formation d'une première couche de matière, une première couche de liquide au moyen d'un faisceau d'énergie et
- en déposant ensuite couche par couche d'autres couches de liquide et en les durcissant localement respectivement avec formation d'autres couches de matière.

4. Procédé suivant l'une des revendications précédentes, **caractérisé en ce qu'**on forme la structure poreuse en utilisant un faisceau d'énergie ayant des paramètres autres que ceux qui sont utilisés pour la production des couches de matière.

5. Procédé suivant l'une des revendications précédentes, caractérisé en ce l'on fait varier de manière stochastique ou déterministe la densité d'énergie du faisceau d'énergie pendant la production de la structure poreuse et on forme ainsi une répartition de pores au hasard au sein de la structure.

6. Procédé suivant l'une des revendications précédentes, **caractérisé en ce que** l'on insert dans une cavité de l'objet une matière magnétique qui forme un moyen supplémentaire de repérage et on ferme la cavité.

7. Procédé suivant l'une des revendications précédentes, **caractérisé en ce qu'**on laisse à l'intérieur de l'objet à munir de repères de la matière en couche de poudre ou liquide et **en ce que** la matière en couche de poudre ou liquide forme le moyen de repérage supplémentaire.

8. Procédé suivant la revendication 7, **caractérisé en ce que** l'on forme dans l'objet par le moyen de repérage, en outre, un repérage sous la forme d'un code en deux dimensions ou en trois dimensions.

9. Procédé suivant la revendication 8, **caractérisé en ce qu'**on forme dans l'objet par le moyen de repérage, en outre, un repérage sous la forme d'un code barre.

10. Procédé suivant la revendication 8 ou 9, **caractérisé en ce qu'**on forme dans l'objet par le moyen de repérage, en outre, un repérage ayant un nombre de contrôle.

11. Procédé suivant l'une des revendications précédentes, **caractérisé en ce qu'**on produit, comme objet muni de repères, un élément d'une turbine à gaz ou d'une turbine à vapeur.

12. Procédé suivant la revendication 11, **caractérisé en ce qu'**on produit comme objet muni de repères une aube de turbine, notamment une aube mobile, une aube directrice ou une aube de compresseur.
